# EUROPEAN PATENT SPECIFICATION

(11) **EP 2 901 812 B1**
(45) Date of publication and mention of the grant of the patent: **04.05.2022**
(21) Application number: 14838767.3
(22) Date of filing: 30.05.2014
(51) Int. Cl.: H04W 8/00, H04W 72/12, H04W 76/14

(54) **COMMUNICATION SYSTEM**
KOMMUNIKATIONSSYSTEM
SYSTÈME DE COMMUNICATION

(30) Priority: 11.09.2013 GB 201316202
(43) Date of publication of application: 05.08.2015
(60) Divisional application: 22155078.3
(73) Proprietor: NEC Corporation, Minato-ku Tokyo 108-8001 (JP)
(72) Inventor: BAGAYOKO, Abdoulaye, Reading Berkshire RG2 0TD (GB); JACTAT, Caroline, Reading Berkshire RG2 0TD (GB); MOUTON, Christian, Reading Berkshire RG2 0TD (GB); RAKOTOHARISON, Lanto, Reading Berkshire RG2 0TD (GB); DELAHAYE, Philippe, Reading Berkshire RG2 0TD (GB)
(74) Representative: MacDougall, Alan John Shaw
(86) International application number: PCT/JP2014/002871
(87) International publication number: WO 2015/037168

(56) References cited:
- US-A1- 2011 268 101
- ETRI: "Design aspects for D2D discovery", 3GPP DRAFT; R1-133180, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716389, Retrieved from the Internet: URL:http://www.3gpp.org/ftp/tsg_ran/WG1_RL 1/TSGR1_74/Docs/ [retrieved on 2013-08-10]
- INTEL CORPORATION: "D2D Discovery Design for Public Safety and General Scenarios", 3GPP DRAFT; R1-132941 - INTEL - D2D DISCOVERY DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716180, Retrieved from the Internet: URL:http://www.3gpp.org/ftp/tsg_ran/WG1_RL 1/TSGR1_74/Docs/ [retrieved on 2013-08-10]
- NEC GROUP: "Network-assisted Device Discovery mechanism", 3GPP DRAFT; R1-133349_D2D_DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716467, Retrieved from the Internet: URL:http://www.3gpp.org/ftp/tsg_ran/WG1_RL 1/TSGR1_74/Docs/ [retrieved on 2013-08-10]
- CMCC: "Discussion on LTE D2D Discovery", 3GPP DRAFT; R2-132334 DISCUSSION ON LTE D2D DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona, Spain; 20130819 - 20130823 8 August 2013 (2013-08-08), XP050718041, Retrieved from the Internet: URL:http://www.3gpp.org/ftp/tsg_ran/WG2_RL 2/TSGR2_83/Docs/ [retrieved on 2013-08-08]
- ZTE: "Solution for ProSe discovery and communication", 3GPP DRAFT; S2-130979-ZTE_ARCH ALT FOR PROSE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Diego, USA; 20130408 - 20130412 2 April 2013 (2013-04-02), XP050708226, Retrieved from the Internet: URL:http://www.3gpp.org/ftp/tsg_sa/WG2_Arc h/TSGS2_96_San_Diego/Docs/ [retrieved on 2013-04-02]
- "Design Guideline for D2D Discovery", R1-133567, 3GPP 3GPP TSG RAN WG1 MEETING #74; BARCELONA, SPAIN, 19TH - 23TH AUGUST 2013, vol. R1-133567, 10 August 2013 (2013-08-10), pages 1-5, XP055193676, France
- INTEL CORPORATION: "Type 2B resource allocation for D2D discovery", 3GPP DRAFT; R2-134287 TYPE 2B RESOURCE ALLOCATION FOR D2D DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG2, no. San Francisco, USA; 20131111 - 20131115 2 November 2013 (2013-11-02), XP050753422, Retrieved from the Internet: URL:http://www.3gpp.org/ftp/tsg_ran/WG2_RL 2/TSGR2_84/Docs/ [retrieved on 2013-11-02]
- ZTE: "Data flow for D2D intra-cell and inter-cell discovery", 3GPP DRAFT; R2-141673 - DATA FLOW FOR D2D INTRA-CELL AND INTER-CELL DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Valencia, Spain; 20140331 - 20140404 22 March 2014 (2014-03-22), XP050792807, Retrieved from the Internet: URL:http://www.3gpp.org/ftp/Meetings_3GPP_ SYNC/RAN2/Docs/ [retrieved on 2014-03-22]
- ALCATEL -LUCENT SHANGHAI BELL ET AL.: 'D2D Discovery design for groupcast, broadcast, and relay' RL-132995, 3GPP 10 August 2013, XP050716225
- TEXAS INSTRUMENTS ET AL.: 'Reference for CQI/PMI Reporting Offset' RL-082493, 3GPP 25 June 2008, XP050110763
- ETRI: 'ProSe Communications for Outside Network Coverage' RL-132557, 3GPP 11 May 2013, XP050698274
- HUAWEI, HISILICON: 'Physical layer options for D2D discovery' RL-131864, 3GPP 11 May 2013, XP050697651
- KDDI: 'Discussion on D2D discovery signaling' RL-133312, 3GPP 09 August 2013, XP050716084
- INTEL CORPORATION: 'D2D Discovery Design for Public Safety and General Scenarios' RL-132941, 3GPP 10 August 2013, XP050716180
- NOKIA, NSN: 'D2D Communication without network coverage' RL-133495, 3GPP 10 August 2013, XP050716602
- ERICSSON ET AL.: 'Direct Discovery for LTE Based D2D' RL-132031, 3GPP 11 May 2013, XP050697815
- LG ELECTRONICS: 'Evaluation Scenarios for Proximity based Services' R1-131308, 3GPP 06 April 2013, XP050697185
- CATT: 'Initial considerations on D2D discovery' R2-132532, 3GPP 09 August 2013, XP050718223
- MOTOROLA: 'Hopping Patterns for UL RS' RL-080719, 3GPP 06 February 2008, page 4, XP050109212
- ASUSTEK: 'Design Guideline for D2D Discovery' RL-133567, 3GPP 10 August 2013, XP055193676

## Description

### Technical Field

The present invention relates to a communication system and to components thereof for providing communication services to mobile or fixed communication devices. The invention has particular but not exclusive relevance to controlling direct communication between user equipment operating in Long Term Evolution (LTE) communication systems currently being developed by the 3rd Generation Partnership Project (3GPP).

### Background Art

In 3GPP LTE networks, a base station (i.e. evolved NodeB, eNB) of a Radio Access Network (RAN) transmits data and signaling between a core network (CN) and User Equipment (UEs) located within the base station's coverage area. Communication between the base station and user equipment (e.g. mobile telephones and the like) is carried out via the Evolved Universal Terrestrial Radio Access (E-UTRA) radio interface.

Recently, 3GPP introduced the possibility of direct, device-to-device (D2D) communications between mobile telephones (and other compatible user equipment) that are in each other's proximity. In case of D2D communications, user data is exchanged between the two (or more) mobile telephones without routing it via the radio access network and the core network, whilst maintaining a control link between each involved mobile telephone and their respective base stations. In LTE networks, D2D communications are thus carried out under continuous network control and only whilst the involved mobile telephones are operating within the network's coverage. The D2D approach results in a more efficient usage of the valuable radio resources available to the base station(s). Example D2D communications and similar, proximity based services have been presented in 3GPP Technical Report (TR) 22.803 titled "Feasibility study for Proximity Services (ProSe)" and 3GPP TR 23.703 titled "Study on architecture enhancements to support Proximity Services (ProSe)".

In order to benefit from the D2D communications (and other proximity based services), a mobile telephone needs to be able to discover and identify other mobile telephones in its proximity (e.g. within its communication range) so that an appropriate direct communication bearer can be set up between them (under the control of their respective base stations).

US 2011/0268101 A1 discloses techniques for performing peer discovery to enable peer-to-peer (P2P) communication. A proximity detection signal used for peer discovery is generated based on one or more physical channels and/or signals used in a wireless network. A UE generates a proximity detection signal occupying at least one resource block based on a SC-FDMA or an OFDMA modulation technique. The UE may generate SC-FDMA symbols or OFDMA symbols in different manners for different physical channels. In another design, the UE generates a proximity detection signal including a primary synchronization signal and a secondary synchronization signal. The UE may transmit the proximity detection signal to indicate its presence and to enable other UEs to detect the UE.

3GPP Draft No. R1-133180 (ETRI: "Design aspects for D2D discovery") discusses aspects of Type 1 and Type 2 discovery procedures. In a Type 1 discovery procedure resources for discovery signal transmission are allocated on a non UE specific basis. In a Type 2 discovery procedure resources for discovery signal transmission are allocated on a per UE specific basis.

3GPP Draft No. R1-132941 (Intel: "D2D Discovery Design for Public Safety and General Scenarios") discloses an eNB that allocates periodic time-frequency resources for transmission/reception of D2D discovery packets in the form of D2D Discovery Zones (D2D DZs). The D2D DZs may be allocated in a cell-specific manner, or be common across multiple geographically neighbouring cells or even the entire network.

### Summary of Invention

### Technical Problem

However, currently proposed discovery mechanisms do not tend to provide: an optimised trade-off between the often conflicting requirements of minimising power consumption and discovery latency; sufficient flexibility to manage load in an efficient and effective manner; optimum interference / contention avoidance; sufficient flexibility to cope with potentially widely varying information transmission needs of the device(s) taking part in the discovery process; appropriate backwards compatibility with earlier communication technology; sufficient scalability to cater for potential future demand for device to device signalling; and/or the like. Further currently proposed discovery mechanisms tend to be limited in the geographical extent over which they can allow discovery to take place.

For example, discovery mechanisms based on location services (or the like) require the mobile telephones to be connected to the network. Furthermore the currently proposed discovery mechanisms have a drawback that even if the devices are detected to be in each other's proximity from the core network point of view, they might still not be able to communicate, directly, with each other due to inadequate radio link conditions between them (e.g. due to interference caused by other transmitting devices).

The present invention provides a communication device for receiving device to device communication, a communication device for transmitting device to device communication, a base station, corresponding methods, and a computer implementable instruction product, as set out in the appended claims.

### Solution to Problem

The invention is defined by the independent claims and advantageous embodiments by the dependent claims.

The invention provides a communication device for receiving device to device communication directly from at least one other communication device in a communication system which uses a plurality of radio frames, wherein each radio frame is subdivided into a plurality of sub-frames, each sub-frame comprising a plurality of communication resources, said communication device comprising: means for obtaining, from a base station, information identifying at least one radio frame designated for communication of ProSe discovery information from the at least one other communication device in a vicinity of said communication device; means for listening within said at least one designated radio frame for an indication that ProSe discovery information is to be transmitted, from at least one other communication device, within said at least one designated radio frame; and means for receiving, when an indication that ProSe discovery information is to be transmitted is found, by said listening means, to be present within said at least one radio frame, ProSe discovery information from said at least one other communication device.

The indication that ProSe discovery information is to be transmitted might identify at least one of: communication resources allocated for transmission of ProSe discovery information from at least one other communication device; and at least one sub-frame designated for transmission of ProSe discovery information from at least one other communication device.

The indication that ProSe discovery information is to be transmitted might identify at least one sub-frame and said at least one sub-frame might comprise a pre-defined number of sub-frames.

The requesting means might be operable to request said allocation of said at least one communication resource by sending, to a base station, a signalling message over an uplink channel (e.g. Physical Uplink Shared Channel or 'PUSCH'). The invention also provides a base station for controlling direct device to device communication between communication devices in a communication system which uses a plurality of radio frames, wherein each radio frame is subdivided into a plurality of sub-frames, each sub-frame is subdivided into a plurality of communication resources, said base station comprising: means for operating a cell; means for transmitting information, within the cell, identifying at least one radio frame designated for communication of ProSe discovery information from at least one of said communication devices to at least one other of said communication devices; and means for receiving a request for allocation of at least one communication resource for transmitting ProSe discovery information from a first of said communication devices to at least one other communication device in a vicinity of said first of said communication devices; wherein said transmitting means is configured for: transmitting, to said first of said communication devices, information identifying communication resources allocated for the communication of said ProSe discovery information within said at least one designated radio frame responsive to said request; and transmitting, within said at least one designated radio frame for receipt by said at least one other communication device in a vicinity of said first of said communication devices, an indication that ProSe discovery information is to be transmitted within said at least one designated radio frame.

The receiving means might be operable to receive said request by receiving at least one signalling message over an uplink channel (e.g. Physical Uplink Shared Channel or 'PUSCH') from said first of said communication devices.

The receiving means might be operable to receive said request by receiving at least one Media Access Control (MAC) Control Element (CE) (e.g. a 'D2D Resource Request' CE or a 'Discovery Resource Request' CE) from said first of said communication devices. In this case, the at least one MAC CE might be scrambled using a temporary identifier for said communication device in said communication system (e.g. a Cell-Radio Network Temporary Identifier or 'CRNTI' or 'T-CRNTT').

The invention also provides a method performed by a communication device for receiving device to device communication directly from at least one other communication device in a communication system which uses a plurality of radio frames, wherein each radio frame is subdivided into a plurality of sub-frames, each sub-frame comprising a plurality of communication resources, the method comprising: obtaining, from a base station, information identifying at least one radio frame designated for communication of ProSe discovery information from the at least one other communication device in a vicinity of said communication device; listening within said at least one designated radio frame for an indication that ProSe discovery information is to be transmitted, from at least one other communication device, within said at least one designated radio frame; and receiving, when an indication that ProSe discovery information is to be transmitted is found, during said listening, to be present within said at least one radio frame, ProSe discovery information from said at least one other communication device.

The invention also provides a method performed by a base station for controlling direct device to device communication between communication devices in a communication system which uses a plurality of radio frames, wherein each radio frame is subdivided into a plurality of sub-frames, each sub-frame is subdivided into a plurality of communication resources, the method comprising: transmitting information, within a cell operated by said base station, identifying at least one radio frame designated for communication of ProSe discovery information from at least one of said communication devices to at least one other of said communication devices; receiving a request for allocation of at least one communication resource for transmitting ProSe discovery information from a first of said communication devices to at least one other communication device in a vicinity of said first of said communication devices; transmitting, to said first of said communication devices, information identifying communication resources allocated for the communication of said ProSe discovery information within said at least one designated radio frame responsive to said request; and transmitting, within said at least one designated radio frame for receipt by said at least one other communication device in a vicinity of said first of said communication devices, an indication that ProSe discovery information is to be transmitted within said at least one designated radio frame.

The present invention also provides a computer program product comprising computer implementable instructions which, when executed by a programmable communications device, cause the programmable communications device to perform a method as described above.

### Brief Description of Drawings

Embodiments of the invention will now be described, by way of example only, with reference to the attached figs. in which:
[Fig. 1]Fig. 1 schematically illustrates a telecommunication system to which embodiments of the invention may be applied;
[Fig. 2]Fig.2 is a block diagram illustrating the main components of the mobile telephone forming part of the system shown in Fig. 1.
[Fig. 3]Fig.3 is a block diagram illustrating the main components of the base station forming part of the system shown in Fig. 1.
[fig. 4]Fig. 4 is a timing diagram illustrating an exemplary method performed by components of the mobile telecommunication system when performing a discovery procedure in accordance with an embodiment of the telecommunication system of Fig. 1.
[fig. 5]Fig. 5 schematically illustrates an exemplary radio frame structure in accordance with an embodiment of the present invention.
[fig. 6]Fig. 6 schematically illustrates exemplary scenarios in which the radio frame structure of Fig. 5 may be used.
[fig. 7]Fig. 7 schematically illustrates further exemplary scenarios in which the radio frame structure of Fig. 5 may be used.

### Description of Embodiments

### Overview

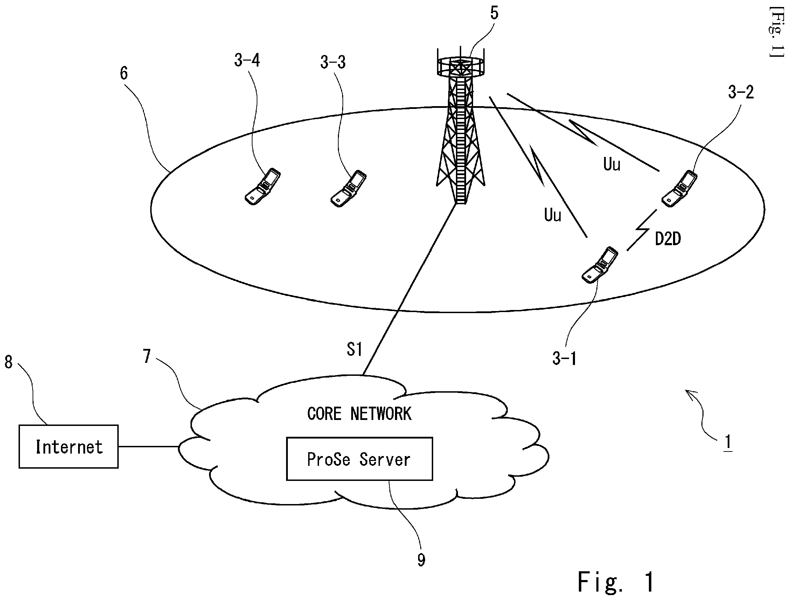

Fig. 1 schematically illustrates a mobile (cellular) telecommunication system 1 including user equipment 3 (comprising, in this example, a plurality of mobile telephones 3-1 to 3-4) and a base station 5 operating a cell 6. The base station 5 is coupled to a core network 7 via an 'S1' interface and the core network 7 is also coupled to other networks (e.g. the internet 8) via one or more gateways (not shown). The 'S1' interface between the base stations 5 and the core network 7 might utilise, for example, a high speed, high bandwidth communication link, such as an optical fiber link or the like.

An 'X2' interface (not shown) is also provided between neighbouring base stations to facilitate data exchange between them (e.g. data exchange related to proximity services). As those skilled in the art will appreciate, whilst four mobile telephones 3 and one base station 5 are shown in Fig. 1 for illustration purposes, additional user equipment and base stations may be present in a deployed system.

The core network 7 includes, amongst other things, a Proximity Services (ProSe) server 9 that provides a number of proximity based services (e.g. services that discover mobiles in physical proximity and enable optimized communications between them) to the mobile telephones 3 (and respective users thereof). The core network 7 also includes other commonly known entities such as, for example, a mobility management entity (MME), a home subscriber server (HSS), a serving gateway (SGW) and a Packet Data Network (PDN) Gateway (PGW), which have also been omitted for sake of simplicity.

In the exemplary system illustrated in Fig. 1, both the first mobile telephone 3-1 and the second mobile telephone 3-2 are served by the same base station 5 (although in other system they may be served by different base stations operated by the same or different network operators) using some evolution of the 'Uu' air interface therebetween. Therefore, any user data between the mobile telephones 3-1 and 3-2 is normally transmitted via the serving base station 5 (and then via the core network 7 using the 'S1' interface). However, when the mobile telephones 3-1 and 3-2 are determined (either by the base station 5 or one or more of the mobile telephones 3) to be in each other's vicinity (and are known to support D2D communications), the base station 5 may set up a communications link between them (e.g. a two way communications link using a radio bearer or the like, or a one way broadcast, multi-cast or unicast communication link). In other examples, the setting up of such a communications link may be triggered by the mobile telephones 3. This communication link (denoted 'D2D' in Fig. 1) may then be used by the first mobile telephone 3-1 and the second mobile telephone 3-2 to exchange user data between them without having to route such user data via the base station 5 (thus relieving the load on their respective 'Uu' interfaces and also on the 'S1' interface).

However, before they are able to set up and communicate using such a direct communication link, the first mobile telephone 3-1 and the second mobile telephone 3-2 need to discover and identify each other by exchanging appropriate control messages. This is referred to as a D2D discovery or proximity discovery process.

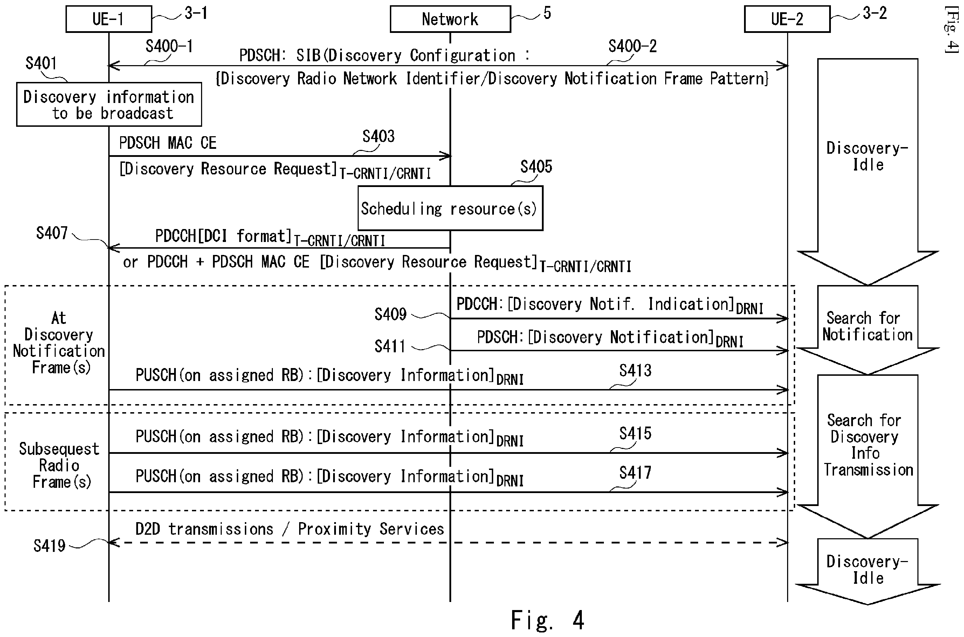

In the exemplary system illustrated in Fig. 4, in order to facilitate the mutual discovery of mobile telephones that are capable of doing so, the RAN (in this example, the base station 5) broadcasts discovery configuration parameters to the mobile telephones 3 in the cell 6. The discovery configuration parameters may be broadcast, for example, using System Information Broadcast (SIB) messages. However, it will be appreciated that dedicated messages, such as Radio Resource Control (RRC) messages, may also be used for configuring individual (or a group of) mobile telephones. The benefit of using SIB messages is that SIB messages can be sent to idle mobile telephones having no active RRC connection as well as mobile telephones having an active RRC connection, whereas RRC messages can only be sent to active mobile telephones that are known to be located in the cell 6 of the base station 5.

Beneficially, the discovery configuration parameters included in the SIB (or RRC) messages include parameters for scrambling/descrambling discovery information sent/ received by the mobile telephones 3, and parameters identifying frames designated for transmission of discovery notifications by the base station 5. The discovery notifications sent by the base station 5 indicate that discovery information transmission will follow, from one or more mobile telephones. Advantageously, in this example, any discovery information transmission to which the notification relates begins in the same radio frame and continues, if required, in one or more immediately subsequent radio frames. Such designated notification frames may be referred to as discovery notification frames. For example, the parameters may indicate that a particular frame pattern is used by the base station 5 in a given system frame (or in a series of system frames) to provide such discovery notification frames.

The discovery configuration (e.g. a discovery frame pattern being used in a particular cell) may be transferred between base stations that belong to the same Public Land Mobile Network (PLMN) (and between base stations that belong to different PLMNs if they support/allow discovery related data exchange via the 'X2' interface). This would beneficially allow the network operator(s) to configure different (or the same) discovery frame patterns in neighbouring cells, as appropriate. The discovery configuration for a given cell or base station may be statically or dynamically configured using Operation And Maintenance (OAM) means or the like.

A D2D capable mobile telephone (in this example the first mobile telephone 3-1) can initiate/attempt D2D communications with another mobile telephone (e.g. the second mobile telephone 3-2) by requesting the network to assign discovery resources to that mobile telephone 3-1. For example, the mobile telephone 3-1 may send, e.g. using the Physical Uplink Shared Channel (PUSCH), an appropriate signalling message to the base station 5. In this example, the mobile telephone 3-1 includes in this request an indication of the amount of resources needed (e.g. a 'discovery buffer size') so that the network can allocate sufficient resources to the mobile telephone accordingly.

Upon receiving the discovery resource request from the first mobile telephone 3-1 (and possibly similar requests from other mobile telephones), the network (base station 5) performs discovery resource scheduling computations to determine the amount of resources needed for discovery related signalling (e.g. the total or average amount of discovery resources per UE/frame/cell/base station).

Next, the serving base station 5 allocates radio resources (e.g. assigned resource blocks and designated sub-frames), within one of the frames designated for transmitting discovery notifications (and possibly subsequent frames if required), to the first mobile telephone 3-1 (and possibly any further mobile telephone that requested it to do so) and informs the requesting mobile telephone 3-1 accordingly. The base station 5, in effect, announces that a resource allocation has been made, to other mobile telephones 3 in its cell 6, in the discovery notification provided in a corresponding discovery notification frame (preferably near the beginning of the discovery notification frame, e.g. in the first sub-frame of the frame, but in any case prior to when the resources have been scheduled). In a particularly beneficial embodiment, the announcement also comprises information identifying the allocated resources (e.g. assigned resource blocks and designated sub-frames) and/or information identifying the number of consecutive sub-frames and/or radio frames that require monitoring for 'discovery' information sent in those sub-frames / radio frames.

In this system, the base station 5 beneficially assigns resources for discovery information transmission(s) in one of the discovery notification frames or the frame(s) immediately following these thereby helping to minimise the impact on DRX management and power consumption in listening UEs. In this example, the resources for discovery information signalling are beneficially assigned relative to the current discovery notification frame (e.g. in the same radio frame or a subsequent one) and the same physical channels that are used for uplink (UE towards network) transmissions. Preferably, LTE Frequency Division Duplexing (FDD) is used for the discovery information transmissions, although a variant of LTE Time Division Duplexing (TDD) may also be used.

Using the above discovery configuration parameters provided by the network (such as SFN / scrambling parameters) and the allocated radio resources, the first mobile telephone 3-1 transmits its discovery information to other user equipment in its vicinity (neighbour UEs). The discovery information may comprise, for example, information identifying the sending UE for proximity-based discovery (such as a unique discovery signature), information indicating a requested/provided service, information indicating a requesting application, service/application data and/or the like.

Beneficially, using the specific radio resources assigned by the base station rather than transmitting the discovery information arbitrarily, the network is able to control the time/frequency orthogonality between resources used by different mobile telephones and hence interference in the system can be minimised.

Since the neighbour UEs (such as the second mobile telephone 3-2) have also been notified by the network of the frames designated for transmitting discovery notifications, by listening to the network's discovery notifications (if any) within such frames, they are able to determine, at a relatively fine level of granularity (e.g. at a resource block, sub-frame, or radio-frame level), when the first mobile telephone's 1 discovery information will begin to be transmitted. Further, the listening UEs are also able to descramble any received data using the appropriate discovery (de-)scrambling parameter, which they also obtained from the SIB/RRC signalling and/or the discovery notification.

The second mobile telephone 3-2 (due to its geographical location being within the transmission range of the first mobile telephone 3-1) is thus able to receive and act on any discovery information by the first mobile telephone 3-1 (sent using the resource blocks indicated by the network's discovery notification) in a particularly power and resource efficient manner with a relatively low risk of interference. Regardless of its RRC operating mode (idle or connected), based on the SIB signalling from the base station 5, the second mobile telephone 3-2 is able to activate its receiver at least for the duration of the discovery notification frames that are indicated to be in use in this cell 6. In other words, the second mobile telephone 3-2 is configured (by the discovery configuration parameters obtained via SIB/RRC) to wake up for (at least) the duration of the discovery notification frame(s), which also carry the first mobile telephone's 3-1 discovery information.

Accordingly, if the first mobile telephone's 3-1 discovery information is sent in an attempt to set up a D2D radio bearer between the first and second mobile telephones 3-1 and 3-2 (or to carry out other proximity based services between them), then the second mobile telephone 3-2 is able to change its operation accordingly. For example, the second mobile telephone 3-2 can respond to the discovery information by sending an appropriate confirmation (if required), control its applications (e.g. notify its user), update data held by the second mobile telephone 3-2 (e.g. save any received data for later use). If a D2D radio bearer is being set up between them following the discovery procedure, the mobile telephones 3-1 and 3-2 can start communicating with each other without having to route their user data via the base station 5.

### Mobile telephone

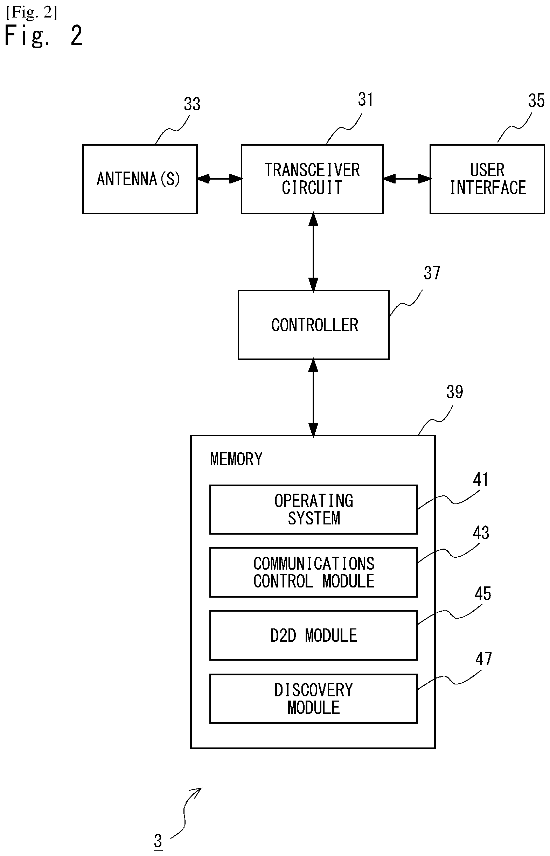

Fig. 2 is a block diagram illustrating the main components of one of the mobile telephones 3 shown in Fig. 1. As shown, the mobile telephone 3 includes transceiver circuitry 31 which is operable to transmit signals to, and to receive signals from, the base station 5 and/or other mobile telephones via at least one antenna 33. The mobile telephone 3 may of course have all the usual functionality of a conventional mobile telephone 3 (such as a user interface 35) and this may be provided by any combination of hardware, software and firmware, as appropriate. The operation of the transceiver circuit 31 is controlled by a controller 37 in accordance with software stored in memory 39. The software includes, among other things, an operating system 41, a communications control module 43, a D2D module 45, and a discovery module 47.

The communications control module 43 handles (e.g. generates, sends and receives) control signals for controlling the connections between the mobile telephone 3 and other user equipment or various network nodes, such as the base station 5. The communications control module 43 controls the separate flows of uplink/downlink data and control data that are to be transmitted to/from the serving base station 5. The communications control module 43 also controls the separate flows of D2D uplink/downlink data that are to be transmitted to/from the other mobile telephones in case the mobile telephone 3 is communicating using a D2D bearer.

The D2D module 45 controls direct, device-to-device communications with the corresponding D2D modules of other mobile telephones. The D2D module 45 also controls communications relating to proximity services that do not involve routing user data via the base station 5, such as sending/receiving discovery information and corresponding discovery responses. The D2D module 45 is operable to obtain, from the network, and to apply parameters for scrambling/descrambling D2D communications (e.g. using the appropriate configuration parameters included in SIB/RRC signalling from the network).

The discovery module 47 handles (e.g. generates, sends and receives) control signals for controlling the discovery procedure. For example, the discovery module 47 generates and sends the discovery resource request message to the base station 5. The discovery module 47 also generates and broadcasts (using the D2D module 45) the discovery information messages to neighbouring user equipment using the radio resources allocated by the network.

### Base station

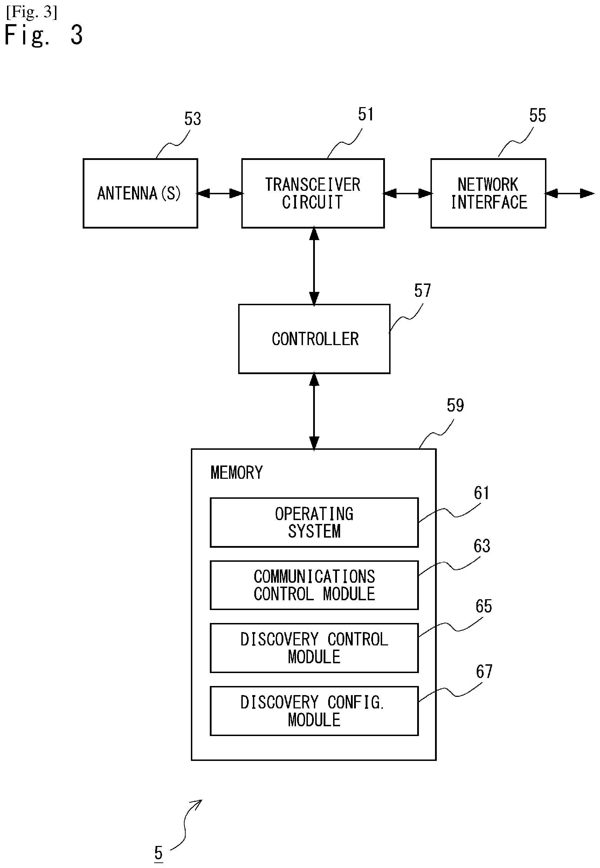

Fig. 3 is a block diagram illustrating the main components of the base station 5 shown in Fig. 1. As shown, the base station 5 includes transceiver circuitry 51 which is operable to transmit signals to, and to receive signals from, the mobile telephones 3 via at least one antenna 53. The base station 5 is also operable to transmit signals to and to receive signals from nodes in the core network 7 (such as the ProSe server 9) and other base stations, via a network interface 55. The operation of the transceiver circuit 51 is controlled by a controller 57 in accordance with software stored in memory 59. The software includes, among other things, an operating system 61, a communications control module 63, a discovery control module 65, and a discovery configuration module 67.

The communications control module 63 controls communications between the base station 5 and the mobile telephones 3, and the network devices such as the MME, the gateways, the ProSe server 9, and neighbour base stations.

The discovery control module 65 controls the provision of the discovery notification frames (e.g. frame pattern) within the system frame transmitted within the cell 6 of the base station 5. By sending appropriate discovery notifications, the discovery control module 65 also controls the allocation of resources within the discovery notification frames to requesting mobile telephones 3 and to cause them to broadcast their discovery information using the resources allocated to them. The discovery notifications (when sent) also serve to inform other (non-requesting) mobile telephones that discovery information transmissions have been scheduled in the current scheduling round.

The discovery configuration module 67 transmits (via the transceiver circuit 51) the applicable discovery configuration parameters to the mobile telephones 3 served by the base station 5 (e.g. the RRC connected and RRC idle mobile telephones in cell 6). In case a common set of discovery configuration parameters are to be used by each compatible mobile telephone within the cell 6, the discovery configuration module 67 provides the discovery configuration parameters using system broadcast information messages (although it may also use dedicated messages, such as RRC messages). In case the set of discovery configuration parameters are applicable to a sub-set of all mobile telephones in the cell 6, the discovery configuration module 67 provides the discovery configuration parameters to the mobile telephones using radio resource control signalling (although it may also provide the discovery configuration parameters using SIB messages along with an identification of the group to which they apply). The discovery configuration module 67 is also operable to obtain discovery configuration from (and to provide such information to) other base stations using the 'X2' interface. The discovery configuration held by the discovery configuration module 67 may be provided/updated by the network operator using e.g. Operation And Maintenance (OAM) means.

In the above description, the mobile telephone 3 and the base station 5 are described for ease of understanding as having a number of discrete modules (such as the communications control modules, the D2D module, the discovery module, and the discovery control module). Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities. These modules may also be implemented in software, hardware, firmware or a mix of these.

### Operation

Fig. 4 is a timing diagram illustrating a method performed by components of the mobile telecommunication system 1 when performing a discovery procedure in accordance with an embodiment of the present invention.

In this example, the first mobile telephone 3-1 (denoted UE-1) initiates D2D communications with the second mobile telephone 3-2 (denoted UE-2) using the discovery procedure, although the same procedure can be applied for initiating other proximity services as well.

In Fig. 4, the arrows next to the second mobile telephone 3-2 indicate the current operating mode of the second mobile telephone 3-2 with regard to the discovery procedure. "Discovery - idle" mode indicates that no specific action is taken, whereas in "Discovery - search" mode the mobile telephone 3-2 is actively listening to certain channels for the purpose of discovery (in this example). It must be noted that discovery modes are independent from other modes/states of the mobile telephone, including the so-called RRC state. In other words, the proposed solution is applicable to mobile telephones in either "RRC idle" or "RRC connected" mode.

In this embodiment, the network (base station 5) provides the applicable discovery configuration parameters via SIB broadcast messages transmitted to user equipment within its cell 6. Therefore, as generally shown in steps S400-1 and S400-2, each respective mobile telephone 3-1 and 3-2 receives the discovery configuration parameters by listening to the system broadcast messages (using their respective transceiver circuits 31). As shown, the received discovery configuration parameters include: i) an identification of the radio network, such as a Discovery Radio Network Identifier (DRNI), to be used for scrambling/descrambling messages during the discovery procedure; and ii) information identifying the discovery notification frame(s) provided in the cell 6, for example (an identification of) a discovery notification frame pattern, which identifies the designated cell discovery notification frames (of a given system frame or a series of system frames) by their SFN.

In step S401, the first mobile telephone 3-1 generates (using its discovery module 47) discovery information to be broadcast to neighbouring user equipment. The discovery information may include information identifying one or more of: the notifying mobile telephone; the type of service or application advertised; and an address (e.g. IP address) used by the sender.

Before it is able to broadcast this information, the first mobile telephone 3-1 needs to request radio resources from the base station 5. Such discovery resource requests (requests for discovery information transmission) may be issued by UEs at any time (irrespective of any discovery notification frame pattern in use) whenever there is discovery information to be sent. Therefore, the first mobile telephone 3-1 generates and sends, in step S403, an appropriately formatted signalling message over the uplink channel for requesting discovery resources from the network for sending the discovery information. The first mobile telephone 3-1 also includes in this message an indication of the amount of data it intends to broadcast, e.g. a Discovery Buffer Size parameter (or the like) so that the network can evaluate and allocate the required amount of radio resources accordingly.

For example, the uplink signalling message may comprise an appropriate Media Access Control (MAC) Control Element (CE), such as 'Discovery Resource Request' MAC CE. In this example, the uplink channel is the so-called Physical Uplink Shared Channel (PUSCH) that is provided between the mobile telephones and the base station 5.

The first mobile telephone 3-1 scrambles the Discovery Resource Request message using its identification known to the network, for example the (Temporary) Cell-Radio Network Temporary Identifier (T-CRNTI / CRNTI) for UE-1. This ensures that the receiving base station 5 is able to verify the sender of the message and decrypt the message contents using the appropriate keys for that mobile telephone.

Upon receipt of the Discovery Resource Request from the first mobile telephone 3-1 (and possibly similar requests from other mobile telephones), the base station 5 (using its discovery control module 65) performs discovery resource scheduling computations and allocates (schedules) radio resources, at step S405, to the requesting UE(s) for the transmission of the discovery notification generated at S401.

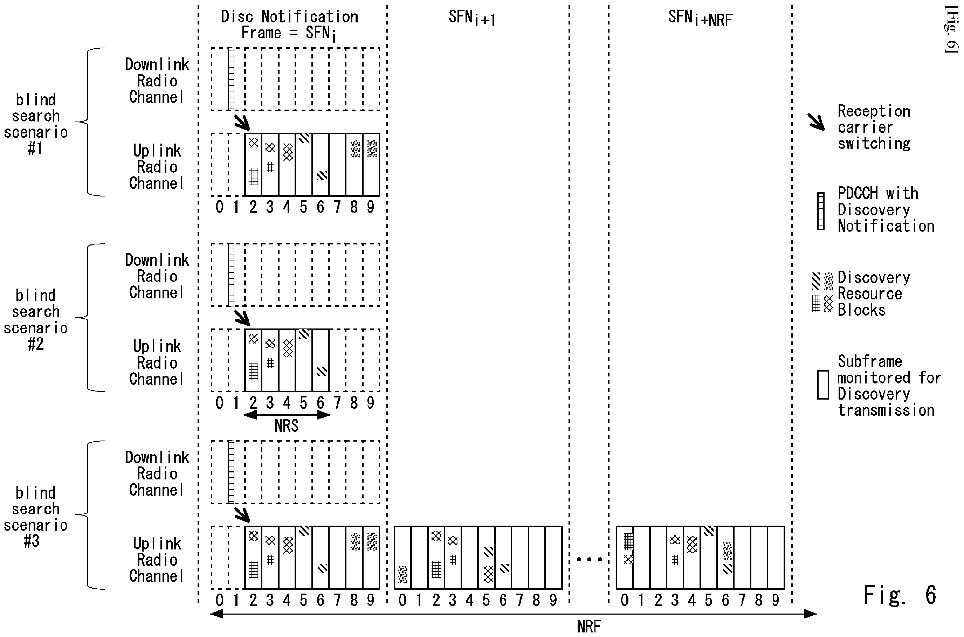

In particular, in step S405 the discovery control module 65 assigns radio resources for the transmission of discovery information as follows:
- In the time domain, by using the current system frame as time reference, e.g. by identifying a particular radio frame by its SFN within the current system frame, and by identifying a sub-frame within the chosen radio frame by an index local to the radio frame. The radio frame(s) allocated for discovery information transmissions are chosen among the designated discovery notification frames or immediately following these, in order to minimize the impact on the management of discontinuous reception (DRX) and optimise power consumption for UEs listening to discovery notifications and discovery information transmissions in the designated discovery notification frames.
- In the frequency domain, by using any suitable (e.g. legacy) resource block allocation method.
- In the power domain, by providing an appropriate transmit power control command applicable to the discovery transmissions.
- In the code/identity domain, optionally, the network assigns to the requesting UE a DRNI-offset which may be used for distinguishing discovery transmissions by different UEs in the so-called "Blind Search" discovery notification mode (which will be discussed in detail with reference to Fig. 6).

After the appropriate radio resources have been scheduled by the discovery control module 65 (of the base station 5), it generates and sends, at step S407, an appropriately formatted downlink control message, e.g. a message over the Physical Downlink Control Channel (PDCCH), and includes in this message a suitable Downlink Control Information (DCI) format identifying the assigned radio resources for the requesting (first) mobile telephone 3-1. Instead of a DCI format), a suitable MAC Control Element (included in e.g. Physical Downlink Shared Channel (PDSCH) signalling) may also be used and sent to the requesting mobile telephone 3-1.

Specifically, the discovery control module 65 informs the requesting mobile telephone 3-1 (of resources assigned to that mobile telephone for broadcasting the discovery notification) by providing one or more set of resource assignment information, herein referred to as Discovery Resource Assignment Information (DRAI). If DCI format is used, then each DRAI may include {SFN} information that identifies the resources to be used (although it may optionally include other information as well). However, if a MAC Control Element is used, then each DRAI may include a {SFN, sub-frame index, Resource Block Assignment, Transmit Power Control command} quadruplet that uniquely identifies the resources to be used and the required transmission characteristics to be applied by the mobile telephone to which the DRAI relates. The discovery control module 65 scrambles the data for each mobile telephone using the legacy (LTE) identity for that mobile telephone (such as its CRNTI or T-CRNTI) so that each mobile telephone is able to obtain its allocated DRAI(s) by descrambling the received message using the same identity.

After resources for broadcasting discovery information have been allocated (e.g. for the current scheduling round), the network sends one or more appropriate discovery notification in the next available discovery notification frame (in S409 and/or S411).

Each UE (that have already received the discovery configuration parameters at S400) is now configured to monitor the discovery notification frame(s) carrying the scheduled discovery notification assignments for the current scheduling round. This is also illustrated in Fig. 4, in which the second mobile telephone 3-2 changes its discovery operating mode to 'search' mode, in which it is listening to discovery notifications, at the beginning of the discovery notification frame.

Accordingly, in each discovery notification frame, if there is any discovery information transmission scheduled (in this case for the first mobile telephone 3-1), the network (base station 5) broadcasts a discovery notification message (at S411), scrambled using the discovery radio network identifier provided earlier (at S400). The discovery notification message may be broadcast via the Physical Downlink Shared Channel (PDSCH). Sending the discovery notification message via broadcast (using a shared channel) and scrambling it using an identifier that is shared among all UEs ensures that the discovery notification message can be received by all UEs within the cell 6.

As generally shown in step S409, other indication messages may be sent prior to (or instead of) the discovery notification (e.g. for backward compatibility). In this case, the discovery notification may be included in any suitable Information Element (IE) e.g. a 'Discovery Notification' IE within one or more of the indication message(s). Such message(s) may be sent via the Physical Downlink Control Channel (PDCCH).

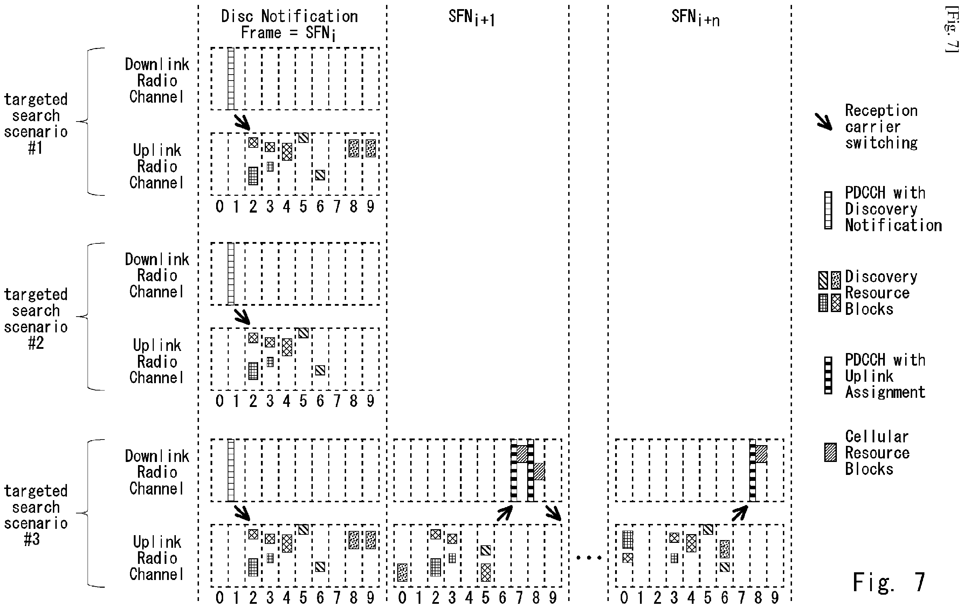

Next, as generally shown in steps S413 to S417, the first mobile telephone 3-1 is able to send (broadcast) its discovery information to the second mobile telephone 3-2, using the resource allocations (DRAI) received at step S407. In particular, the first mobile telephone 3-1 performs its discovery information transmission(s) according to the received DRAI(s) and using the DRNI to scramble the data (or using DRNI+DRNI-offset if a DRNI-offset was also provided). Further details of the various possibilities for transmitting the discovery information are given with reference to Figs. 6 and 7 below.

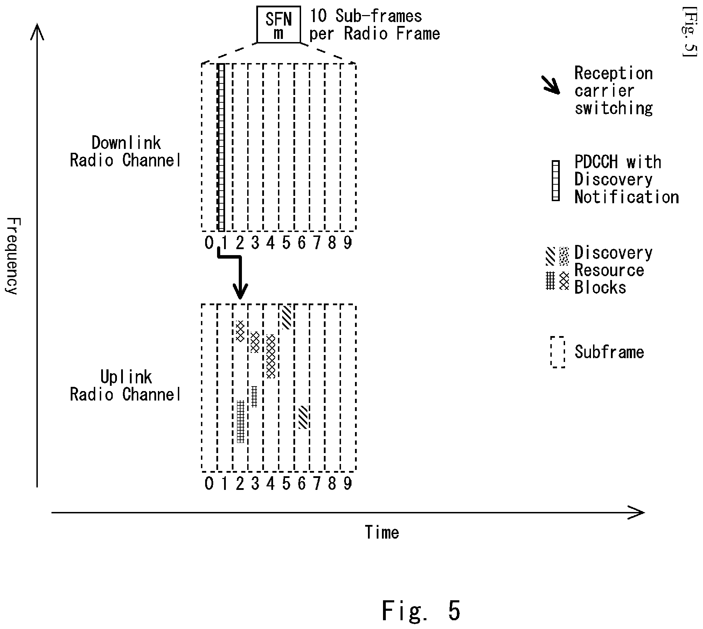

Fig. 5 schematically illustrates an exemplary radio frame structure in accordance with an embodiment of the present invention. This particular radio frame structure may be used in various scenarios (as illustrated in Figs. 6 and 7) for radio frame level scheduling of discovery information transmissions.

Fig. 5 shows one downlink radio frame and one uplink radio frame, each of which comprises ten sub-frames (sub-frames with index #0 to #9). As can be seen, the vertical axis illustrates the frequency domain and the horizontal axis illustrates the time domain of the resources used in this system. Accordingly, the downlink and uplink radio frames occupy different frequencies whilst they are transmitted substantially concurrently (although in different direction).

The downlink radio channel carries control information from the base station 5 to the mobile telephone 3. The control information (discovery notifications) may be carried in any sub-frame of the discovery notification frame. Each discovery notification may include one or more discovery transmission allocation(s) (e.g. DRAI) for different UEs.

In this example, the downlink sub-frame #1 carries the discovery notifications over the PDSCH. The discovery notifications are sent in order to assign various uplink (time/frequency) resources for each mobile telephone that have sent a discovery resource request which has not been fully complied with yet. The various areas of the uplink sub-frames having unique patterns indicate the respective resource blocks allocated for transmitting the discovery information by a plurality of mobile telephones. Although in this example the discovery resource blocks are spread across multiple sub-frames for illustration purposes, in other examples the resource blocks may be allocated using fewer sub-frames (even a single sub-frame) or more sub-frames (e.g. all sub-frames of the current radio frame or sub-frames from another radio frame, if appropriate).

The arrow between the downlink sub-frame carrying the resource allocations and the corresponding uplink resources for transmitting the discovery information (by the mobile telephones) indicates that discovery information transmission cannot be scheduled earlier than a given number of sub-frame(s) (in this example one sub-frame) after the PDSCH sub-frame carrying the discovery notification has been transmitted. This is to allow the respective transceiver circuits 31 of the scheduled mobile telephones 3 to switch from the downlink radio channel (in downlink sub-frame #1) to the uplink radio channel (in uplink sub-frame #2).

The following three general scenarios may be distinguished:
i) there are no (remaining) discovery resource requests (and hence no need to send any discovery notification message or schedule discovery information transmissions) in a given discovery notification occasion (in the discovery notification frame being scheduled);
ii) all scheduled discovery information transmissions might fit in a single radio frame (e.g. they can be sent using a subset of all available sub-frames in that radio frame); and
iii) the scheduled discovery information transmissions require more than one radio frame (e.g. the current radio frame and a number of radio frames immediately subsequent to the current radio frame / all available sub-frames in the current radio frame and at least one additional sub-frame from the immediately subsequent radio frame).

Figs. 6 and 7 schematically illustrate various exemplary scenarios, based on the above general scenarios, in which the radio frame structure of Fig. 5 may be used.

### Blind Search

The group of scenarios illustrated in Fig. 6 may be commonly referred to as the 'Blind Search' scenarios. This means that if there is a discovery notification message sent in the current discovery notification frame, the mobile telephones receiving that discovery notification message blindly search for discovery information transmissions in each of the sub-frames identified by the information included in that discovery notification message.

In the first 'Blind Search' scenario, the discovery search space includes all remaining sub-frames of the current discovery notification frame (i.e. any sub-frames left after the switching from downlink to uplink has been performed). In this case, the discovery notification message may not contain any scheduling information. Accordingly, the mobile telephones are expected to monitor the whole discovery notification frame for discovery information transmissions.

In the second 'Blind Search' scenario, the discovery search space may be described in terms of the number of consecutive sub-frames (within the current discovery notification frame). These consecutive sub-frames are denoted 'NRS' in Fig. 6 and they include the specified number (NRS) of sub-frames of the current discovery notification frame (i.e. after the switching from downlink to uplink has been performed). Accordingly, the mobile telephones are expected to monitor a number of consecutive sub-frames for discovery information transmissions. The applicable number of consecutive sub-frames (e.g. NRS) may be indicated in the discovery notification message (or by other means).

In the third 'Blind Search' scenario, the discovery search space may be described in terms of the number of consecutive radio frames (starting with and including the current Discovery Notification Frame). These consecutive radio frames are denoted 'NRF' in Fig. 6. Accordingly, the mobile telephones are expected to monitor a number of consecutive radio frames for discovery information transmissions. The applicable number of consecutive radio frames (e.g. NRF) may be indicated in the discovery notification message (or by other means).

Step S413 (of Fig. 4) may be performed only in one of the discovery notification frames, i.e. in one of the sub-frames of the frames denoted SFNᵢ of Fig. 6 or 7, depending on the type of scheduling used. On the other hand, steps S415 and S417 may only be performed in the radio frames following the discovery notification frames, e.g. in one of the radio frames SFNᵢ₊₁ to SFNᵢ₊ₙ of Fig. 6 or 7.

In each of the 'Blind Search' scenarios, the searching UEs (e.g. the second mobile telephone 3-2) are able to discriminate between transmissions by different UEs as such transmissions are scrambled using different DRNI-offsets (as mentioned above with reference to step S405).

### Targeted Search

The group of scenarios illustrated in Fig. 7 may be commonly referred to as the 'Targeted Search' scenarios. This means that if there is a discovery notification message sent in the current discovery notification frame, the mobile telephones receiving that discovery notification message search for discovery information transmissions only in the one or more sub-frame(s) identified by the information included in that discovery notification message. In particular, the discovery search space may be defined by a list of DRAIs, each being uniquely assigned for a given transmitting UE.

Therefore, in the 'Targeted Search' scenarios, the searching UEs are able to discriminate between transmissions by different UEs as such transmissions belong to different DRAIs.

The three 'Targeted Search' scenarios generally correspond to the above described 'Blind Search' scenarios, with the exception that monitoring of an entire radio frame (or the entire remaining sub-frames of the current radio frame as per NRS) is not necessary. In the 'Targeted Search' scenarios, the receiving mobile telephones need to monitor specific, individual DRAIs only.

An important benefit of the 'Targeted Search' (apart from potential savings in power consumption) is that the monitoring UE's are able to switch back to the downlink radio channel sooner, e.g. when it is determined that DRAIs have been scheduled in the current radio frame. This allows the network to schedule and transmit regular (i.e. non-discovery related) downlink transmissions for these mobile telephones already in the same radio frame that was used for the discovery information transmissions. This is illustrated in the third example shown in Fig. 7 (at radio frames SFNᵢ₊₁ and SFNᵢ₊ₙ).

Such non-contiguous discovery information transmissions (that allow interleaved downlink reception) may be particularly advantageous, for improving (i.e. reducing) the latency of downlink transmissions.

### Modifications and alternatives

Detailed embodiments have been described above. As those skilled in the art will appreciate, a number of modifications and alternatives can be made to the above embodiments whilst still benefiting from the inventions embodied therein.

In the above embodiments, the network is described to provide discovery configuration parameters to all discovery-capable UEs by sending broadcast messages. However, it will be appreciated that the discovery configuration parameters may also be provided using dedicated signalling, e.g. Radio Resource Control signalling. In this case, the applicable discovery configuration parameters can be sent to individual (or one or more group of) mobile telephones, for example, mobile telephones that indicated their compatibility with the proximity based services.

In case the (D2D capable) mobile telephones are assigned to one or more groups (for the purpose of discovery related transmissions), the configuration parameters may also include:
- a Group Discovery Radio Network Identifier for scrambling/descrambling discovery related notifications sent either by the network or discovery information sent by the mobile telephone; and/or
- a Group Discovery Notification Frame Pattern identifying the SFN(s) used for discovery notification.

The group based discovery management may be beneficial for the optimisation of discovery transmissions within a group of UEs. It will be appreciated that there might be a plurality of group configurations at any given time and each UE may belong to one or more groups.

In the above description, the network (base station) initially provides the applicable discovery configuration parameters using SIB broadcast messages. However, it will be appreciated that these parameters may be provided to each mobile telephone (using SIB/RRC as appropriate) at any time, e.g. when the mobile telephone registers with the network, enters the geographical area of the base station's cell, upon request, periodically, and/or whenever the parameters change.

In the above description of step S407 (discovery resource assignment step), the network informs the requesting UE (of resources assigned to that UE for broadcasting the discovery notification) via the PDCCH (e.g. notifying a DRAI for that UE using a suitable Downlink Control Indication). However, it will also be appreciated that the network may also inform the requesting UE via the PDSCH. In this case, a DRAI (or a list of DRAIs) for the requesting UE may be indicated using a suitable MAC CE.

In the above description of step S411, the discovery notification message is scrambled using the discovery radio network identifier so that it can be received by all UEs within the base station's cell. However, it will be appreciated that if the discovery notification frame is reserved for a group of mobile telephones (i.e. it is a group discovery notification frame), the discovery notification message may be scrambled using a discovery radio network identifier specific to that group (e.g. a group discovery radio network identifier). In this case the discovery notification message can be received only by the members of that group.

In the above embodiments, communications protocols and interfaces conforming to the 3GPP LTE standards are described, thus a 'Uu' interface is provided between the base station and the mobile telephones. However, it will be appreciated that the use of other communication standards is also possible.

In the above embodiments, a mobile telephone based telecommunication system was described. As those skilled in the art will appreciate, the signalling techniques described in the present application can be employed in other communication systems. Although the above embodiments described mobile telephones as examples of user equipment, other communication nodes or mobile communication devices may also be used for example, personal digital assistants, laptop computers, web browsers, e-book readers, personal computers implementing 3GPP technology, machine type communication (MTC) devices, modem devices included in routers (e.g. a MIFI - LTE WIFI router), etc. may be used without departing from the scope of the invention as defined in the appended claims.

It will be appreciated that mobile telephones may be configured to carry out only a subset of the above described functionalities. For example, some mobile telephones may carry out only listening functionalities (e.g. as the second mobile telephone 3-2 described above) regardless whether or not they are capable of requesting discovery resources and transmitting discovery information using the allocated resources. Similarly, some mobile telephones may carry out only broadcasting functionalities (e.g. as the first mobile telephone 3-1 described above) and transmit discover information to other user equipment in their vicinity regardless whether or not they are capable of listening to discovery information transmitted by such other user equipment.

In the embodiments described above, the mobile telephones and the base station will each include transceiver circuitry. Typically this circuitry will be formed by dedicated hardware circuits. However, in some embodiments, part of the transceiver circuitry may be implemented as software run by the corresponding controller.

In the above embodiments, a number of software modules were described. As those skilled in the art will appreciate, the software modules may be provided in compiled or un-compiled form and may be supplied to the base station or the relay station as a signal over a computer network, or on a recording medium. Further, the functionality performed by part or all of this software may be performed using one or more dedicated hardware circuits.

The above embodiments describe exchanging discovery related data directly between two mobile telephones. It will be appreciated that the above procedures may be used for other purposes than discovery, e.g. for any purpose in which direct communications (one-way or two-way) between two or more mobile telephones are required. For example, the above embodiments may be applied for the communication of any data directly between mobile telephones, e.g. data sent after the transmission of any discovery information (e.g. sending further data and/or receiving a response) and/or the communication of data sent without (or prior to) any discovery.

It will also be appreciated that the above procedures may be used for any direct communications between mobile telephones e.g. group communications regardless of the presence/type of radio network coverage (e.g. outside of the cell(s) of a base station/ RAN). For example, the above procedures may be implemented by a cluster head UE (user equipment configured to implement certain base station/RAN functions) communicating with other user equipment. The base station functionalities may also be implemented by a relay node or a relaying mobile telephone.

Various other modifications will be apparent to those skilled in the art and will not be described in further detail here.

### Exemplary Benefits

It can be seen that the system allows direct inter-UE discovery to be performed using uplink radio resources, under the control of the radio network, in a particularly efficient and effective manner and with the potential to provide a number of associated benefits, for example including:
- optimal trade-off between minimisation of UE power consumption and discovery latency through flexible scheduling of a pattern of discovery notification frames (e.g. referred to as "Discovery DRX" or a Discover Notification Frame Pattern);
- optimal trade-off of radio resource allocation between cellular (conventional) transmissions and discovery related transmissions to adapt to cell load through use of the flexible resource allocation scheme allowing the mixing of discovery and cellular transmissions down to sub-frame level;
- avoids intra-cell interference and contention through exclusive grant of radio resources for discovery purpose and use of a UE-specific index to discriminate Discovery Information transmissions from different UEs;
- allows inter-cell and inter network operator discovery through the possible sharing (across inter-eNB and inter-PLMN interfaces) of the limited set of Discovery Configuration, enabling UEs served by neighbour cells to listen to Discovery Notification and Discovery Info Transmissions in cell A, provided that they are aware of cell A's system frame;
- allows for variable size of Discovery Information through the possibility to schedule any number of Discovery Info Transmissions to transport Discovery Information Messages;
- backward compatible with LTE system (i.e. does not affect legacy, non-discovery-capable UEs) through backward-compatible additions in SIBs (new Discovery Configuration) and RRC (new Discovery Notification) messaging, as well as MAC (new Control Elements) that deal with discovery capable UEs only;
- scalability of signalling: a) through options for fine-grained or larger-grained scheduling information in Discovery Notification, b) through options for physical layer (using modified legacy DCI) or MAC layer (using new MAC CE) resource assignment; and
- enables management of groups of UEs through the definition of a distinct Discovery Configuration for any group of UEs served by the cell, therefore allowing specific trade-offs (as described above) for each group.

### Reference Signs List

1 MOBILE TELECOMMUNICATION SYSTEM
3-1,3-2,3-3,3-4 MOBILE TELEPHONES
5 BASE STATION
6 CELL
7 CORE NETWORK
8 INTERNET
9 ProSe SERVER
31,51 TRANSCEIVER CIRCUIT
33,53 ANTENNA
35 USER INTERFACE
37,57 CONTROLLER
39,59 MEMORY
41,61 OPERATING SYSTEM
43,63 COMMUNICATIONS CONTROL MODULE
45 D2D MODULE
47 DISCOVERY MODULE
55 NETWORK INTERFACE
65 DISCOVERY CONTROL MODULE
67 DISCOVERY CONFIG MODULE

## Claims

1. A communication device (3-2) for receiving device to device communication directly from at least one other communication device (3-1) in a communication system (1) which uses a plurality of radio frames, wherein each radio frame is subdivided into a plurality of sub-frames, each sub-frame comprising a plurality of communication resources, said communication device (3-2) comprising:
means (45) for obtaining, from a base station (5), information identifying at least one radio frame designated for communication of Proximity Services, ProSe, discovery information from the at least one other communication device (3-1) in a vicinity of said communication device (3-2);
means (47) for listening within said at least one designated radio frame for an indication that ProSe discovery information is to be transmitted, from at least one other communication device (3-1), within said at least one designated radio frame; and
means (31) for receiving, when an indication that ProSe discovery information is to be transmitted is found, by said listening means (47), to be present within said at least one radio frame, ProSe discovery information from said at least one other communication device (3-1) to be present in said at least on radio frame.

2. The communication device (3-2) according to claim 1, wherein said indication that ProSe discovery information is to be transmitted identifies at least one of: communication resources allocated for transmission of ProSe discovery information from at least one other communication device (3-1); and at least one sub-frame designated for transmission of ProSe discovery information from at least one other communication device (3-1).

3. The communication device (3-2) according to claim 2, wherein said indication that ProSe discovery information to be transmitted identifies a pre-defined number of sub-frames.

4. A base station (5) for controlling direct device to device communication between communication devices (3-1, 3-2) in a communication system which uses a plurality of radio frames, wherein each radio frame is subdivided into a plurality of sub-frames, each sub-frame is subdivided into a plurality of communication resources, said base station (5) comprising:
means for operating a cell (6);
means (67) for transmitting information, within the cell (6),
identifying at least one radio frame designated for communication of Proximity Services, ProSe, discovery information from at least one of said communication devices (3-1) to at least one other of said communication devices (3-2); and
means (65) for receiving a request for allocation of at least one communication resource for transmitting ProSe discovery information from a first of said communication devices (3-1) to at least one other communication device (3-2) in a vicinity of said first of said communication devices (3-1);
wherein said transmitting means (67) is configured for:
transmitting, to said first of said communication devices (3-1),
information identifying communication resources allocated for the communication of said ProSe discovery information within said at least one designated radio frame responsive to said request; and
transmitting, within said at least one designated radio frame for receipt by said at least one other communication device (3-2) in a vicinity of said first of said communication devices (3-1), an indication that ProSe discovery information is to be transmitted within said at least one designated radio frame.

5. The base station (5) according to claim 4, wherein said receiving means (65) is operable to receive said request by receiving at least one signalling message over an uplink channel from said first of said communication devices (3-1).

6. The base station (5) according to claim 4 or 5, wherein said receiving means (65) is operable to receive said request by receiving at least one Media Access Control, MAC, Control Element, CE, from said first of said communication devices (3-1).

7. The base station (5) according to claim 6, wherein said at least one MAC CE is scrambled using a temporary identifier for said communication device (3-1) in said communication system.

8. A method performed by a communication device (3-2) for receiving device to device communication directly from at least one other communication device (3-1) in a communication system (1) which uses a plurality of radio frames, wherein each radio frame is subdivided into a plurality of sub-frames, each sub-frame comprising a plurality of communication resources, the method comprising:
obtaining (S400-2), from a base station (5), information identifying at least one radio frame designated for communication of Proximity Services, ProSe, discovery information from the at least one other communication device (3-1) in a vicinity of said communication device (3-2);
listening within said at least one designated radio frame for an indication that ProSe discovery information is to be transmitted, from at least one other communication device (3-1), within said at least one designated radio frame; and
receiving (S413), when an indication that ProSe discovery information is to be transmitted is found, during said listening, to be present within said at least one radio frame, ProSe discovery information from said at least one other communication device (3-1).

9. A method performed by a base station (5) for controlling direct device to device communication between communication devices (3-1, 3-2) in a communication system (1) which uses a plurality of radio frames, wherein each radio frame is subdivided into a plurality of sub-frames, each sub-frame is subdivided into a plurality of communication resources, the method comprising:
transmitting (S400-1, S400-2) information, within a cell (6) operated by said base station (5), identifying at least one radio frame designated for communication of Proximity Services, ProSe, discovery information from at least one of said communication devices (3-1) to at least one other of said communication devices (3-2);
receiving (S403) a request for allocation of at least one communication resource for transmitting ProSe discovery information from a first of said communication devices (3-1) to at least one other communication device (3-2) in a vicinity of said first of said communication devices (3-1);
transmitting (S407), to said first of said communication devices (3-1), information identifying communication resources allocated for the communication of said ProSe discovery information within said at least one designated radio frame responsive to said request; and
transmitting (S411), within said at least one designated radio frame for receipt by said at least one other communication device (3-2) in a vicinity of said first of said communication devices (3-1), an indication that ProSe discovery information is to be transmitted within said at least one designated radio frame.

10. A computer implementable instructions product comprising computer implementable instructions which, when executed by a programmable communications device, cause the programmable communications device to become configured as a communications device (3-2) according to claim 1 when dependent on claim 8 or as a base station (5) according to claim 4 when dependent on claim 9 to perform the method of claim 8 or 9.

## Patentansprüche

1. Kommunikationsgerät (3-2) zum direkten Empfangen von Device-to-Device-Kommunikation von mindestens einem anderen Kommunikationsgerät (3-1) in einem Kommunikationssystem(1), das eine Vielzahl von Funkrahmen verwendet, wobei jeder Funkrahmen in eine Vielzahl von Teilrahmen geteilt ist und jeder Teilrahmen eine Vielzahl von Kommunikationsressourcen aufweist, wobei das Kommunikationsgerät (3-2) aufweist:
eine Einrichtung (45) zum Erhalten von Information, die mindestens einen Funkrahmen identifiziert, der für die Übertragung von ProSe-, Proximity Services, Ermittlungsinformation von dem mindestens einen anderen Kommunikationsgerät (3-1) in einer Umgebung des Kommunikationsgeräts (3-2) spezifiziert ist, von einer Basisstation (5);
eine Einrichtung (47) zum Ausführen eines Überwachungsvorgangs innerhalb des mindestens einen spezifizierten Funkrahmens zum Erfassen einer Anzeige, die anzeigt, dass ProSe-Ermittlungsinformation von mindestens einem anderen Kommunikationsgerät (3-1) innerhalb des mindestens einen spezifizierten Funkrahmens übertragen werden soll; und
eine Einrichtung (31) zum Empfangen von ProSe-Ermittlungsinformation von dem mindestens einen anderen Kommunikationsgerät (3-1), wenn die Überwachungseinrichtung (47) feststellt, dass eine Anzeige, die anzeigt, dass ProSe-Ermittlungsinformation übertragen werden soll, in dem mindestens einen Funkrahmen vorhanden ist.

2. Kommunikationsgerät (3-2) nach Anspruch 1, wobei die Anzeige, die anzeigt, dass ProSe-Ermittlungsinformation übertragen werden soll, identifiziert: Kommunikationsressourcen, die für die Übertragung von ProSe-Ermittlungsinformation von mindestens einem anderen Kommunikationsgerät (3-1) zugewiesen sind, und/oder mindestens einen Teilrahmen, der zum Übertragen von ProSe-Ermittlungsinformation von mindestens einem anderen Kommunikationsgerät (3 -1) spezifiziert ist.

3. Kommunikationsgerät (3-2) nach Anspruch 2, wobei die Anzeige, die anzeigt, dass ProSe-Ermittlungsinformation übertragen werden soll, eine vordefinierte Anzahl von Teilrahmen identifiziert.

4. Basisstation (5) zum Steuern einer direkten Device-to-Device-Kommunikation zwischen Kommunikationsgeräten (3-1,3-2) in einem Kommunikationssystem, das eine Vielzahl von Funkrahmen verwendet, wobei jeder Funkrahmen in eine Vielzahl von Teilrahmen geteilt ist, wobei jeder Teilrahmen in eine Vielzahl von Kommunikationsressourcen geteilt ist, wobei die Basisstation (5) aufweist:
eine Einrichtung zum Betreiben einer Zelle (6);
eine Einrichtung (67) zum Übertragen von Information, die mindestens einen Funkrahmen identifiziert, der für die Kommunikation von ProSe-, Proximity Services, Ermittlungsinformation von mindestens einem der Kommunikationsgeräte (3-1) an mindestens ein anderes der Kommunikationsgeräte (3-2) spezifiziert ist, innerhalb der Zelle (6); und
eine Einrichtung (65) zum Empfangen einer Anforderung für eine Zuweisung mindestens einer Kommunikationsressource zum Übertragen von ProSe-Ermittlungsinformation von einem ersten der Kommunikationsgeräte (3-1) an mindestens ein anderes Kommunikationsgerät (3-2) in einer Umgebung des ersten der Kommunikationsgeräte (3-1),
wobei die Übertragungseinrichtung (67) dafür konfiguriert ist, in Antwort auf die Anforderung an das erste der Kommunikationsgeräte (3-1) Information zu übertragen, die Kommunikationsressourcen identifiziert, die für die Übertragung der ProSe-Ermittlungsinformation innerhalb des mindestens einen spezifizierten Funkrahmens zugewiesen ist; und
Übertragen einer Anzeige, die anzeigt, dass ProSe-Ermittlungsinformation innerhalb des mindestens einen spezifizierten Funkrahmens übertragen werden soll, innerhalb des mindestens einen spezifizierten Funkrahmens zum Empfang durch das mindestens eine andere Kommunikationsgerät (3-2) in einer Umgebung des ersten der Kommunikationsgeräte (3-1).

5. Basisstation (5) nach Anspruch 4, wobei die Empfangseinrichtung (65) dafür betreibbar ist, die Anforderung durch Empfangen mindestens einer Signalisierungsnachricht über einen Uplink-Kanal vom ersten der Kommunikationsgeräte (3-1) zu empfangen.

6. Basisstation (5) nach Anspruch 4 oder 5, wobei die Empfangseinrichtung (65) dafür betreibbar ist, die Anforderung durch Empfangen mindestens eines MAC-, Media Access Control, Steuerelements, CE, vom ersten der Kommunikationsgeräte (3-1) zu empfangen.

7. Basisstation (5) nach Anspruch 6, wobei das mindestens eine MAC-CE unter Verwendung einer temporären Kennung für das Kommunikationsgerät (3-1) im Kommunikationssystem gescrambelt ist.

8. Verfahren, das durch ein Kommunikationsgerät (3-2) ausgeführt wird, zum direkten Empfangen einer Device-to-Device-Kommunikation von mindestens einem anderen Kommunikationsgerät (3-1) in einem Kommunikationssystem (1), das eine Vielzahl von Funkrahmen verwendet, wobei jeder Funkrahmen in eine Vielzahl von Teilrahmen geteilt ist, wobei jeder Teilrahmen eine Vielzahl von Kommunikationsressourcen aufweist, wobei das Verfahren die Schritte aufweist:
Erhalten (S400-2) von Information, die mindestens einen Funkrahmen identifiziert, der für eine Übertragung von ProSe-, Proximity Services, Ermittlungsinformation von dem mindestens einen anderen Kommunikationsgerät (3-1) in der Nähe des Kommunikationsgeräts (3-2) spezifiziert ist, von einer Basisstation (5);
Ausführen eines Überwachungsvorgangs innerhalb des mindestens einen spezifizierten Funkrahmens zum Erfassen einer Anzeige, die anzeigt, dass ProSe-Ermittlungsinformation von mindestens einem anderen Kommunikationsgerät (3-1) innerhalb des mindestens einen spezifizierten Funkrahmens übertragen werden soll; und
Empfangen (S413) von ProSe-Ermittlungsinformation von dem mindestens einen anderen Kommunikationsgerät (3-1), wenn während des Überwachungsvorgangs festgestellt wird, dass eine Anzeige, die anzeigt, dass ProSe-Ermittlungsinformation übertragen werden soll, innerhalb des mindestens einen Funkrahmens vorhanden ist.

9. Verfahren, das durch eine Basisstation (5) ausgeführt wird, zum Steuern einer direkten Device-to-Device-Kommunikation zwischen Kommunikationsgeräten (3-1, 3-2) in einem Kommunikationssystem (1), das eine Vielzahl von Funkrahmen verwendet, wobei jeder Funkrahmen in eine Vielzahl von Teilrahmen geteilt ist, wobei jeder Teilrahmen in eine Vielzahl von Kommunikationsressourcen geteilt ist, wobei das Verfahren die Schritte aufweist:
Übertragen (S400-1, S400-2) von Information, die mindestens einen Funkrahmen identifiziert, der für eine Übertragung von Pro-Se-, Proximity Services, Ermittlungsinformation von mindestens einem der Kommunikationsgeräte (3-1) an mindestens ein anderes der Kommunikationsgeräte (3-2) spezifiziert ist, innerhalb einer Zelle (6), die durch die Basisstation (5) betrieben wird;
Empfangen (S403) einer Anforderung für eine Zuweisung mindestens einer Kommunikationsressource zum Übertragen von ProSe-Ermittlungsinformation von einem ersten der Kommunikationsgeräte (3-1) an mindestens ein anderes Kommunikationsgerät (3-2) in einer Umgebung des ersten der Kommunikationsgeräte (3-1);
Übertragen (S407) von Information, die Kommunikationsressourcen identifiziert, die für die Kommunikation der ProSe-Ermittlungsinformation innerhalb des mindestens einen spezifizierten Funkrahmens zugewiesen sind, in Antwort auf die Anforderung an das erste der Kommunikationsgeräte (3-1); und
Übertragen (S411) einer Anzeige, die anzeigt, dass ProSe-Ermittlungsinformation innerhalb des mindestens einen spezifizierten Funkrahmens übertragen werden soll, innerhalb des mindestens einen spezifizierten Funkrahmens zum Empfang durch das mindestens eine andere Kommunikationsgerät (3-2) in einer Umgebung des ersten der Kommunikationsgeräte (3-1).

10. Computerimplementierbares Befehlsprodukt, das computerimplementierbare Befehle enthält, die, wenn sie durch ein programmierbares Kommunikationsgerät ausgeführt werden, veranlassen, dass das programmierbare Kommunikationsgerät als ein Kommunikationsgerät (3-2) nach Anspruch 1, insofern abhängig von Anspruch 8, oder als eine Basisstation (5) nach Anspruch 4, insofern abhängig von Anspruch 9, konfiguriert wird, um das Verfahren nach Anspruch 8 oder 9 auszuführen.

## Revendications

1. Dispositif de communication (3-2) pour recevoir une communication de dispositif à dispositif directement à partir d'au moins un autre dispositif de communication (3-1) dans un système de communication (1) qui utilise une pluralité de trames radio, dans lequel chaque trame radio est subdivisée en une pluralité de sous-trames, chaque sous-trame comprenant une pluralité de ressources de communication, ledit dispositif de communication (3-2) comprenant :
des moyens (45) pour obtenir, à partir d'une station de base (5), des informations identifiant au moins une trame radio désignée pour une communication d'informations de découverte de services de proximité, ProSe, à partir de l'au moins un autre dispositif de communication (3-1) à proximité dudit dispositif de communication (3-2) ;
des moyens (47) pour écouter à l'intérieur de ladite au moins une trame radio désignée une indication que des informations de découverte ProSe doivent être transmises, à partir d'au moins un autre dispositif de communication (3-1), à l'intérieur de ladite au moins une trame radio désignée; et
des moyens (31) pour recevoir, quand une indication que des informations de découverte ProSe doivent être transmises est trouvée, par lesdits moyens d'écoute (47), comme étant présente à l'intérieur de ladite au moins une trame radio, des informations de découverte ProSe à partir dudit au moins un autre dispositif de communication (3-1) comme étant présentes dans ladite au moins une trame radio.

2. Dispositif de communication (3-2) selon la revendication 1, dans lequel ladite indication que des informations de découverte ProSe doivent être transmises identifie au moins une parmi : des ressources de communication attribuées pour une transmission d'informations de découverte ProSe à partir d'au moins un autre dispositif de communication (3-1) ; et au moins une sous-trame désignée pour une transmission d'informations de découverte ProSe à partir d'au moins un autre dispositif de communication (3-1).

3. Dispositif de communication (3-2) selon la revendication 2, dans lequel ladite indication que des informations de découverte ProSe doivent être transmises identifie un nombre prédéfini de sous-trames.

4. Station de base (5) pour commander une communication directe de dispositif à dispositif entre des dispositifs de communication (3-1, 3-2) dans un système de communication qui utilise une pluralité de trames radio, dans laquelle chaque trame radio est subdivisée en une pluralité de sous-trames, chaque sous-trame est subdivisée en une pluralité de ressources de communication, ladite station de base (5) comprenant :
des moyens pour faire fonctionner une cellule (6) ;
des moyens (67) pour transmettre des informations, à l'intérieur de la cellule (6), identifiant au moins une trame radio désignée pour une communication d'informations de découverte de services de proximité, ProSe, à partir d'au moins un desdits dispositifs de communications (3-1) à au moins un autre desdits dispositifs de communication (3-2) ; et
des moyens (65) pour recevoir une demande d'attribution d'au moins une ressource de communication pour transmettre des informations de découverte ProSe depuis un premier desdits dispositifs de communications (3-1) à au moins un autre dispositif de communication (3-2) à proximité dudit premier desdits dispositifs de communication (3-1) ;
dans laquelle lesdits moyens de transmission (67) sont configurés pour:
transmettre, audit premier desdits dispositifs de communication (3-1), des informations identifiant des ressources de communication attribuées pour la communication desdites informations de découverte ProSe à l'intérieur de ladite au moins une trame radio désignée en réponse à ladite demande ; et
transmettre, à l'intérieur de ladite au moins une trame radio désignée pour une réception par ledit au moins un autre dispositif de communication (3-2) à proximité dudit premier desdits dispositifs de communication (3-1), une indication que des informations de découverte ProSe doivent être transmises à l'intérieur de ladite au moins une trame radio désignée.

5. Station de base (5) selon la revendication 4, dans laquelle lesdits moyens de réception (65) sont utilisables pour recevoir ladite demande en recevant au moins un message de signalisation sur un canal de liaison montante à partir dudit premier desdits dispositifs de communication (3-1).

6. Station de base (5) selon la revendication 4 ou 5, dans laquelle lesdits moyens de réception (65) sont utilisables pour recevoir ladite demande en recevant au moins un élément de commande, CE, de commande d'accès au support, MAC, à partir dudit premier desdits dispositifs de communication (3-1).

7. Station de base (5) selon la revendication 6, dans laquelle ledit au moins un CE MAC est brouillé en utilisant un identificateur temporaire pour ledit dispositif de communication (3-1) dans ledit système de communication.

8. Procédé réalisé par un dispositif de communication (3-2) pour recevoir une communication de dispositif à dispositif directement à partir d'au moins un autre dispositif de communication (3-1) dans un système de communication (1) qui utilise une pluralité de trames radio, dans lequel chaque trame radio est subdivisée en une pluralité de sous-trames, chaque sous-trame comprenant une pluralité de ressources de communication, le procédé comprenant :
l'obtention (S400-2), à partir d'une station de base (5), d'informations identifiant au moins une trame radio désignée pour une communication d'informations de découverte de services de proximité, ProSe, à partir de l'au moins un autre dispositif de communication (3-1) à proximité dudit dispositif de communication (3-2) ;
l'écoute, à l'intérieur de ladite au moins une trame radio désignée, d'une indication que des informations de découverte ProSe doivent être transmises, à partir d'au moins un autre dispositif de communication (3-1), à l'intérieur de ladite au moins une trame radio désignée ; et
la réception (S413), quand une indication que des informations de découverte ProSe doivent être transmises est trouvée, durant ladite écoute, comme étant présente à l'intérieur de ladite au moins une trame radio, d'informations de découverte ProSe à partir dudit au moins un autre dispositif de communication (3-1).

9. Procédé réalisé par une station de base (5) pour commander une communication directe de dispositif à dispositif entre des dispositifs de communication (3-1, 3-2) dans un système de communication (1) qui utilise une pluralité de trames radio, dans lequel chaque trame radio est subdivisée en une pluralité de sous-trames, chaque sous-trame est subdivisée en une pluralité de ressources de communication, le procédé comprenant :
la transmission (S400-1, S400-2) d'informations, à l'intérieur d'une cellule (6) utilisée par ladite station de base (5), identifiant au moins une trame radio désignée pour une communication d'informations de découverte de services de proximité, ProSe, à partir d'au moins un desdits dispositifs de communications (3-1) à au moins un autre desdits dispositifs de communication (3-2) ;
la réception (S403) d'une demande d'attribution d'au moins une ressource de communication pour transmettre des informations de découverte ProSe depuis un premier desdits dispositifs de communications (3-1) à au moins un autre dispositif de communication (3-2) à proximité dudit premier desdits dispositifs de communication (3-1) ;
la transmission (S407), audit premier desdits dispositifs de communication (3-1), d'informations identifiant des ressources de communication attribuées pour la communication desdites informations de découverte ProSe à l'intérieur de ladite au moins une trame radio désignée en réponse à ladite demande; et
la transmission (S411), à l'intérieur de ladite au moins une trame radio désignée pour une réception par ledit au moins un autre dispositif de communication (3-2) à proximité dudit premier desdits dispositifs de communication (3-1), d'une indication que des informations de découverte ProSe doivent être transmises à l'intérieur de ladite au moins une trame radio désignée.

10. Produit d'instructions pouvant être mises en œuvre par ordinateur, comprenant des instructions pouvant être mises en œuvre par ordinateur qui, quand elles sont exécutées par un dispositif de communication programmable, amènent le dispositif de communication programmable à devenir configuré comme un dispositif de communication (3-2) selon la revendication 1 quand elle dépend de la revendication 8 ou comme une station de base (5) selon la revendication 4 quand elle dépend de la revendication 9 pour réaliser le procédé de la revendication 8 ou 9.
